# EUROPÄISCHE PATENTSCHRIFT

(11) **EP 1 195 379 B1**
(45) Veröffentlichungstag und Bekanntmachung des Hinweises auf die Patenterteilung: **23.04.2003**
(21) Anmeldenummer: 01117799.5
(22) Anmeldetag: 02.08.2001
(51) Int. Cl.: C07F 7/18, C07F 7/08, C07F 7/10

(54) **Cyclische Silazane**
Cyclic silazanes
Silazanes cycliques

(30) Priorität: 05.10.2000 DE 10049183
(43) Veröffentlichungstag der Anmeldung: 10.04.2002
(73) Patentinhaber: Consortium für elektrochemische Industrie GmbH, 81379 München (DE)
(72) Erfinder: Brader, Leonhard, 83730 Fischbachau (DE); Schäfer, Oliver Dr., 81377 München (DE); Bauer, Andreas Dr., 81371 München (DE); Frey, Volker Dr., 84489 Burghausen (DE); Pachaly, Bernd Dr., 84561 Mehring-Öd (DE)
(74) Vertreter: Fritz, Helmut, Dr.

(56) Entgegenhaltungen:
- DE-A- 3 546 376
- US-A- 3 146 250

## Beschreibung

Die Erfindung betrifft cyclische Silazane, ein Verfahren zu deren Herstellung und deren Umsetzungen mit Wasser und Alkoholen.

Cyclische Silazane können beispielsweise als Vorstufe zur Herstellung von Aminoalkyl-terminierten Polysiloxanen verwendet werden. Hydrolysiert man cyclische Silazane wie in DE-A-3546376 beschrieben, so erhält man Bisaminoalkyl-terminierte Disiloxane:

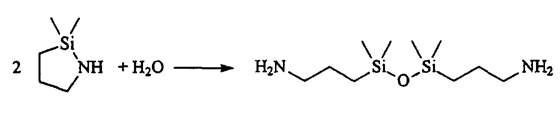

In DE-A-3546376 sind auch cyclische Silazane erwähnt, welche durch intramolekulare Hydrosilylierung hergestellt werden, insbesondere N-substituierte Silazane, welche als Substituenten eine SiY₂H-Gruppe tragen, wobei Y für einen Kohlenwasserstoff-Rest steht. Bei der Hydrolyse dieser Silazane entstehen neben den gewünschten Bis-aminoalkyl-terminierten Disiloxanen auch Mono-aminoalkyl-substituierte Disiloxane und unsubstituierte 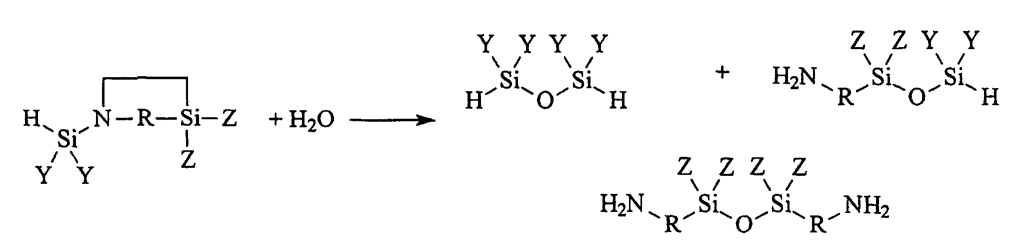 Tetraalkyldisiloxane:
Z weist die Bedeutungen von Y auf.

Erstmals sind cyclische, am Stickstoff silylsubstituierte Silazane in US-A-3146250 beschrieben. Die Silyl-Substituenten weisen die allgemeine Formel I,

SiY₂-R'-X (I)

auf, wobei Y für einen Kohlenwasserstoff-Rest steht, R' ein divalenter Kohlenwasserstoff ist und X für ein Halogen-Atom mit einem Molekulargewicht größer 35 Dalton steht. Bei der Hydrolyse dieser silyl-substituierten cyclischen Silazane entstehen neben den gewünschten Bis-aminoalkyl-terminierten Disiloxanen auch Mono-chloralkyl-substituierte Disiloxane und Bis-chloralkyl-substituierte Disiloxane.

Gegenstand der Erfindung sind cyclische Silazane der allgemeinen Formel II 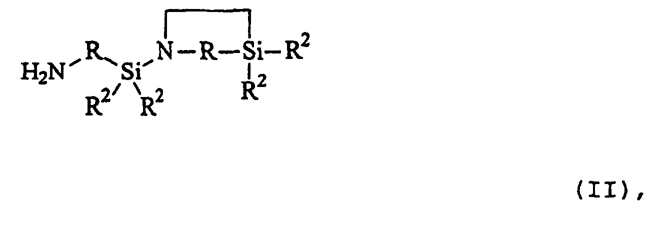 in der
- **R**: einen gegebenenfalls halogensubstituierten unverzweigten C₃-C₄-Alkylenrest,
- **R**^{**x**}: Wasserstoff oder einen gegebenenfalls halogensubstituierten C₁-C₁₀-Kohlenwasserstoffrest und
- **R**^{**2**}: ein Wasserstoffatom oder einen monovalenten gegebenenfalls Cyano- oder halogensubstituierten Si-C gebundenen C₁-C₂₀-Kohlenwasserstoffrest oder C₁-C₂₀-Kohlewasserstoffoxyrest in denen jeweils eine oder mehrere, einander nicht benachbarte Methylen-einheiten durch Gruppen -O-, -CO-, -COO-, -OCO-, oder -OCOO-, -S-, oder -N**R**^{**x**}- ersetzt sein können und in denen eine oder mehrere, einander nicht benachbarte Methineinheiten durch Gruppen, -N=,-N=N-,oder -P= ersetzt sein können,
bedeuten.

Die Verbindungen der allgemeinen Formel II enthalten zwei Si-Alkyl-Stickstoff-Reste und keinen Si-Alkyl-Halogen-Rest mehr. Werden nun die Verbindungen der allgemeinen Formel II hydrolysiert, so entstehen Bisaminoalkyl-terminierte Disiloxane der allgemeinen Formel III in hohen Ausbeuten und im wesentlichen ohne weitere Nebenprodukte:

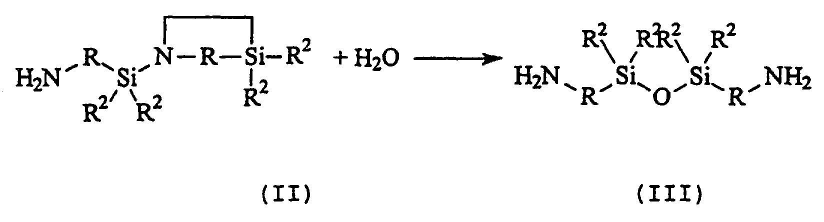

Dieses Verfahren zur Herstellung von Bisaminoalkyl-terminierten Disiloxanen der allgemeinen Formel III ist ebenfalls Gegenstand der Erfindung.

**R** ist ein unverzweigter C₃-C₄-Alkylenrest, der substituiert sein kann mit Halogenatomen, insbesondere Fluor und Chlor.

Die C₁-C₂₀-Kohlenwasserstoffreste und C₁-C₂₀-Kohlenwasserstoffoxyreste **R**^{**2**} können aliphatisch gesättigt oder ungesättigt, aromatisch, geradkettig oder verzweigt sein. **R**^{**2**} weist vorzugsweise 1 bis 12 Atome, insbesondere 1 bis 6 Atome, vorzugsweise nur Kohlenstoffatome, oder ein Alkoxysauerstoffatom und sonst nur Kohlenstoffatome auf. Vorzugsweise ist **R**^{**2**} ein geradkettiger oder verzweigter C₁-C₆-Alkylrest. Besonders bevorzugt sind die Reste Methyl, Ethyl, Phenyl, Vinyl und Trifluorpropyl.

Besonders bevorzugt sind die Verbindungen, bei denen **R** ein Propylenrest bedeutet und **R**^{**2**} Methyl, Ethyl, Phenyl, Vinyl oder Trifluorpropyl bedeutet.

Werden nun die Verbindungen der allgemeinen Formel II mit Alkoholen der allgemeinen Formel **R**^{**3**}-OH umgesetzt, so entstehen Aminoalkyl-terminierte Dialkylalkoxysilane der allgemeinen Formel VI ebenfalls in hohen Ausbeuten und auch im wesentlichen ohne weitere Nebenprodukte.

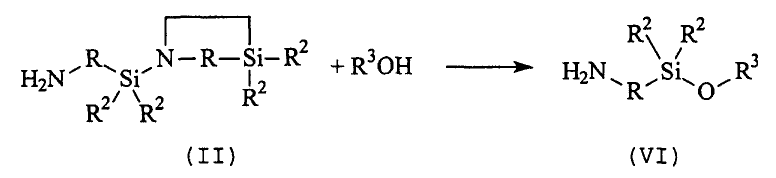

Dabei weisen **R**^{**2**} **,R**^{**x**} und **R** die oben genannten Bedeutungen auf und **R**^{**3**} bedeutet einen monovalenten gegebenenfalls Cyano- oder halogensubstituierten C₁-C₂₀-Kohlenwasserstoffrest in dem eine oder mehrere, einander nicht benachbarte Methyleneinheiten durch Gruppen -O-, -CO-, -COO-, -OCO-, oder -OCOO-, -S-, oder -N**R**^{**x**}- ersetzt sein können und in dem eine oder mehrere, einander nicht benachbarte Methineinheiten durch Gruppen, -N=,-N=N-,oder -P= ersetzt sein können und der gegebenenfalls weitere OH-Gruppen tragen kann.

Dieses Verfahren zur Herstellung von Aminoalkyl-terminierten Dialkylmethoxysilanen der allgemeinen Formel III ist ebenfalls Gegenstand der Erfindung.

**R**^{**3**} bedeutet vorzugsweise Methyl, Ethyl, Isopropyl oder Methyoxymethyl.

Ein weiterer Gegenstand der Erfindung ist ein Verfahren zur Herstellung der cyclischen Silazane der allgemeinen Formel II, bei dem ein Halogenalkyldialkylchlorsilan der allgemeinen Formel IV 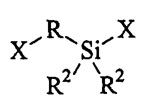 oder Bishalogenalkyltetraalkyldisilazanen der allgemeinen Formel V 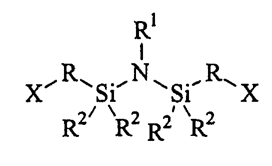 oder ein Gemisch aus Verbindungen der allgemeinen Formeln IV und V, bei denen
- **X**: F, Cl, Br, oder I,
- **R**^{**1**}: ein Wasserstoffatom oder einen monovalenten gegebenenfalls halogensubstituierten Si-C gebundenen C₁-C₁₅-Kohlenwasserstoffrest in dem jeweils eine oder mehrere, einander nicht benachbarte Methyleneinheiten durch Gruppen -O-, -CO-, -COO-, -OCO-, oder -OCOO-, oder -S- ersetzt sein können und in denen eine oder mehrere, einander nicht benachbarte Methineinheiten durch Gruppen, -N=,-N=N-,oder -P= ersetzt sein können, bedeuten und
- **R**^{**2**} und **R**: die vorstehenden Bedeutungen aufweisen,
mit Ammoniak umgesetzt wird.

Das aus DE-A-3546376 bekannte Verfahren zur Darstellung von am Stickstoff silylsubstituierten Silazanen verwendet teure, schwer herzustellende Edukte. Das in US-A-3146250 beschriebene Verfahren führt nur in geringen Ausbeuten zum gewünschten Produkt.

Das vorstehende Verfahren hingegen liefert die Verbindungen der allgemeinen Formel II kostengünstig, d.h. aus preiswerten Edukten und in hohen Ausbeuten.

Kennzeichnend für dieses Verfahren ist, daß der Ammoniak bei diesem Verfahren gleichzeitig Reaktand aber auch Akzeptor für den freiwerdenden Halogenwasserstoff ist und bei ausreichendem Druck zusätzlich noch Lösungsmittel ist. Daher wird der Ammoniak stöchiometrisch oder im Überschuß bezogen auf die Verbindungen der allgemeinen Formeln IV und V eingesetzt. Bevorzugt ist ein 10 bis 140 facher molarer Überschuß, besonders bevorzugt ein 30 bis 70 facher molarer Überschuß.

Zur Beschleunigung der Reaktion können gegebenenfalls noch Katalysatoren zugesetzt werden, beispielsweise Metallhalogenide, wie z.B. Natriumiodid oder Kaliumiodid. Die Reaktionskomponenten sollten in einer bevorzugten Ausführungsform aktiv durchmischt werden. Um eine gute Durchmischung der Reaktionskomponenten zu gewährleisten, kann die Reaktion z.B. unter Rühren durchgeführt werden. Die Reaktionstemperatur ist durch die Löslichkeit der Reaktionskomponenten nach unten und durch die Zersetzungstemperaturen der Edukte und Produkte nach oben hin begrenzt. Bevorzugt wird das Verfahren bei 0 °C bis 150 °C, besonders bevorzugt über Raumtemperatur durchgeführt. Besonders bevorzugt ist eine Reaktionstemperatur von mindestens 40°C, insbesondere mindestens 60 C.

Vorteilhaft für die Reaktion ist die Ausführung unter erhöhtem Druck von 1,1 bis 1000 bar. In einer bevorzugten Ausführungsform beträgt der Druck mindestens 20 bar. Dabei kann durch die Zumischung eines Inertgases der Druck variabel eingestellt werden. Die Isolierung und Reinigung der Verbindungen der allgemeinen Formel II erfolgt nach bekannten technischen Verfahren wie z.B. Filtration, Extraktion oder Destillation. Die so dargestellten Verbindungen lassen sich in der üblichen Weise handhaben.

Das Verfahren kann in Anwesenheit oder in Abwesenheit von aprotischen Lösungsmitteln durchgeführt werden. Falls aprotische Lösungsmittel verwendet werden, sind Lösungsmittel oder Lösungsmittelgemische mit einem Siedepunkt bzw. Siedebereich von bis zu 120° C bei 0,1 MPa bevorzugt. Beispiele für solche Lösungsmittel sind Ether, wie Dioxan, Tetrahydrofuran, Diethylether, Di-isopropylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Di-isopropylketon, Methyl-isobutylketon (MIBK) ; Ester, wie Ethylacetat, Butylacetat, Propylpropionat, Ethylbutyrat, Ethyl-isobutyrat; Schwefelkohlenstoff und Nitrobenzol, oder Gemische dieser Lösungsmittel.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1:

### Aminierung von 3-Chlorpropyl-dimethylchlorsilan

Im 0,3 l Autoklav mit Thermoelement, Rührer und Manometer wurden 28.2 g (0.165 mol) 3-Chlorpropyl-dimethylchlorsilan vorgelegt und der Autoklav verschlossen. Bei 10 °C wurden 78 g (4,581 mol) Ammoniak (28 facher Überschuß) innerhalb von 3 min aufgepresst, anschließend in 50 min unter Rühren auf 106 °C mittels Ölbad geheizt. Dabei stellte sich ein Druck von 65 -67 bar ein. Nach Abkühlung wurde der Ammoniaküberschuß.langsam abgeblasen und nach 4 h der Autoklav geöffnet. Produkt und Ammoniumchlorid lagen als leicht gelbe Suspension vor, die nach Aufrühren in Pentan (2x 70 ml) aus dem Autoklav gegossen werden konnten.
Nach Filtration und zweimaligem Nachwaschen mit Pentan wurde das Filtrat eingeengt und bei 70 °C und 100 mbar destilliert. Ausbeute: 17.85g N-((3-Aminopropyl)-dimethylsilyl)-2,2-dimethyl-1-aza-2-silacyclopentan. - ¹H-NMR (CDCl₃, 25 °C): δ = 0.00 (s, 6 H, H₂NCH₂CH₂CH₂Si(C**H**₃)₂), 0.05 (s, 6 H, NCH₂CH₂CH₂Si(C**H**₃)₂), 0.45 (m, 2 H, H₂NCH₂CH₂C**H**₂Si(CH₃)₂), 0.59 (t, 2 H, NCH₂CH₂C**H**₂Si(CH₃)₂), 1.00 (s, 2 H, **H**₂NCH₂CH₂CH₂Si(CH₃)₂), 1.36 (m, 2 H, H₂NCH₂C**H**₂CH₂Si(CH₃)₂), 1.65 (q, 2 H, NCH₂C**H**₂CH₂Si(CH₃)₂), 2.62 (t, 2 H, H₂NC**H**₂CH₂CH₂Si(CH₃)₂), 2.88 (t, 2 H, NC**H**₂CH₂CH₂Si(CH₃)₂). - ²⁹Si-{¹H}-NMR (CDCl₃, 25 °C) : δ = 3.3 (s, H₂NCH₂CH₂CH₂**Si**(CH₃)₂), 18.5 (s, NCH₂CH₂CH₂**Si**(CH₃)₂).

### Beispiel 2

### Aminierung von Bis(3-chlorpropyl)-tetramethyldisilazan

Wie oben beschrieben wurden im Autoklav bei 105 -107 °C und 3 h Reaktionsdauer 23.74 g (0.083 mol) Bis(3-chlorpropyl)-tetramethyldisilazan und 78 g (4.5 mol) Ammoniak (54 facher Überschuß) gerührt. Das Rohprodukt wurde analog Beispiel 1 aufgearbeitet.

Ausbeute: 17.24 g N-((3-Aminopropyl)-dimethylsilyl)-2,2-dimethyl-1-aza-2-silacyclopentan.

### Beispiel 3

### Aminierung von Bis(3-chlorpropyl)-tetramethyldisilazan

Es wurden 30 g einer 80 % Lösung des in Beispiel 2 verwendeten Silazans in tert-Butylmethylether mit 78 g Ammoniak im Autoklav zur Reaktion gebracht. Die Aufarbeitung erfolgte analog Beispiel 1. Man erhielt 16.33 g N-((3-Aminopropyl)-dimethylsilyl)-2,2-dimethyl-1-aza-2-silacyclopentan.

### Beispiel 4:

### Hydrolyse von cyclischem Silazan zu Bisaminoalkyl-terminiertem Disiloxan

23 g (100 mmol) N-((3-Aminopropyl)-dimethylsilyl)-2,2-dimethyl-1-aza-2-silacyclopentan wurden in 50 ml THF gelöst und anschließend wurden 4 ml Wasser unter Eiskühlung zugegeben. Nach Destillation erhielt man 23,6 g Bis(3-aminopropyl)-tetramethydisiloxan (95 % Ausbeute).

### Beispiel 5:

### Alkoholyse von cyclischem Silazan zu Aminoalkyl-terminiertem Dimethylmethoxysilan

23 g (100 mmol) N-((3-Aminopropyl)-dimethylsilyl)-2,2-dimethyl-1-aza-2-silacyclopentan wurden in 50 ml THF gelöst und anschließend wurden 30 ml Methanol unter Eiskühlung zugegeben. Nach Destillation erhielt man 28 g Aminopropyldimethylmethoxysilan (95 % Ausbeute).

## Patentansprüche

1. Cyclische Silazane der allgemeinen Formel II 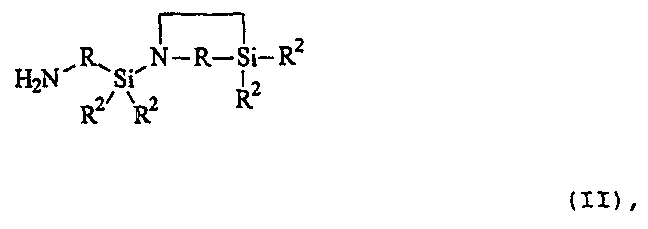 in der
**R** einen gegebenenfalls halogensubstituierten unverzweigten C₃-C₄-Alkylenrest,
**R**^{**x**} Wasserstoff oder einen gegebenenfalls halogensubstituierten C₁-C₁₀-Kohlenwasserstoffrest und
**R**^{**2**} ein Wasserstoffatom oder einen monovalenten gegebenenfalls Cyano- oder halogensubstituierten Si-C gebundenen C₁-C₂₀-Kohlenwasserstoffrest oder C₁-C₂₀-Kohlenwasserstoffoxyrest in denen jeweils eine oder mehrere, einander nicht benachbarte Methylen-einheiten durch Gruppen -O-, -CO-, -COO-, -OCO-, oder -OCOO-, -S-, oder -N**R**^{**x**}- ersetzt sein können und in denen eine oder mehrere, einander nicht benachbarte Methineinheiten durch Gruppen, -N=,-N=N-,oder -P= ersetzt sein können,
bedeuten.

2. Cyclische Silazane nach Anspruch 1, bei denen **R**^{**2**} ausgewählt wird aus den Resten Methyl, Ethyl, Phenyl, Vinyl und Trifluorpropyl.

3. Verfahren zur Herstellung der cyclischen Silazane der allgemeinen Formel II gemäss Anspruch 1, bei dem ein Halogenalkyldialkylchlorsilan der allgemeinen Formel IV 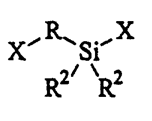 oder Bishalogenalkyltetraalkyldisilazanen der allgemeinen Formel V 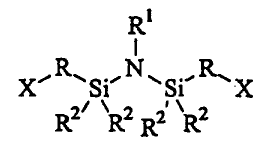 oder ein Gemisch aus Verbindungen der allgemeinen Formeln IV und V, bei denen
**X** F, Cl, Br, oder I,
**R**^{**1**} ein Wasserstoffatom oder einen monovalenten gegebenenfalls halogensubstituierten Si-C gebundenen C₁-C₁₅-Kohlenwasserstoffrest in dem jeweils eine oder mehrere, einander nicht benachbarte Methyleneinheiten durch Gruppen -O-, -CO-, -COO-, -OCO-, oder -OCOO-, oder -S- ersetzt sein können und in denen eine oder mehrere, einander nicht benachbarte Methineinheiten durch Gruppen, -N=,-N=N-,oder -P= ersetzt sein können, bedeuten und
**R**^{**2**} und **R** die in Anspruch 1 genannten Bedeutungen aufweisen, mit Ammoniak umgesetzt wird.

4. Verfahren nach Anspruch 3, bei dem Ammoniak bezogen auf die Verbindungen der allgemeinen Formeln IV und V im 10 bis 140 fachen molarem Überschuß eingesetzt wird.

5. Verfahren zur Herstellung von Bisaminoalkyl-terminierten Disiloxanen der allgemeinen Formel III, 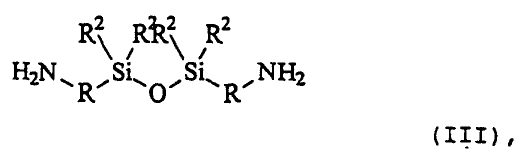 bei dem Verbindungen der allgemeinen Formel II gemäss Anspruch 1 hydrolysiert werden, wobei **R**^{**2**} und **R** die in Anspruch 1 genannten Bedeutungen aufweisen.

6. Verfahren zur Herstellung von Aminoalkyl-terminierten Dialkylalkoxysilanen der allgemeinen Formel VI, 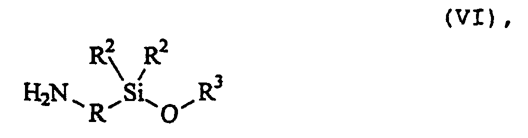 bei dem Verbindungen der allgemeinen Formel II gemäss Anspruch 1 mit Alkoholen der allgemeinen Formel **R**^{**3**}-OH umgesetzt werden, wobei **R**^{**2**}**, R**^{**x**} und **R** die in Anspruch 1 genannten Bedeutungen aufweisen und
**R**^{**3**} einen monovalenten gegebenenfalls Cyano- oder halogensubstituierten C₁-C₂₀-Kohlenwasserstoffrest in dem eine oder mehrere, einander nicht benachbarte Methyleneinheiten durch Gruppen -O-, -CO-, -COO-, -OCO-, oder -OCOO-, -S-, oder -N**R**^{**x**}- ersetzt sein können und in dem eine oder mehrere, einander nicht benachbarte Methineinheiten durch Gruppen, -N=,-N=N-,oder -P= ersetzt sein können und der gegebenenfalls weitere OH-Gruppen tragen kann, bedeutet.

## Claims

1. Cyclic silazanes of the general formula II 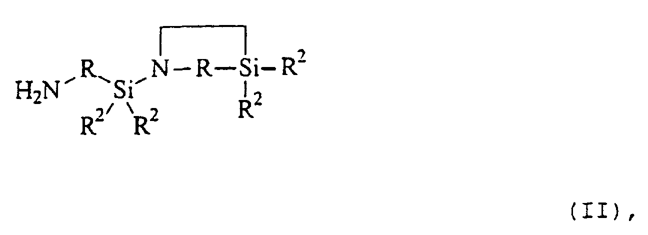 in which
**R** is an optionally halogen-substituted unbranched C₃-C₄-alkylene radical,
**R**^{**x**} is hydrogen or an optionally halogen-substituted C₁-C₁₀-hydrocarbon radical, and
**R**^{**2**} is a hydrogen atom or a monovalent, optionally cyano- or halogen-substituted, Si-C-bound C₁-C₂₀-hydrocarbon radical or C₁-C₂₀-hydrocarbonoxy radical, in each of which one or more non-adjacent methylene units may be replaced by -O-, -CO-, -COO-, -OCO-, -OCOO-, -S- or -N**R**^{**x**}- groups and in which one or more non-adjacent methine units may be replaced by -N=, -N=N- or -P= groups.

2. Cyclic silazanes according to Claim 1, in which **R**^{**2**} is selected from the radicals methyl, ethyl, phenyl, vinyl and trifluoropropyl.

3. Process for the preparation of the cyclic silazanes of the general formula II according to Claim 1, in which a haloalkyldialkylchlorosilane of the general formula IV 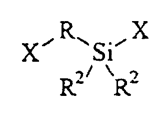 or bishaloalkyltetraalkyldisilazanene [sic] of the general formula V 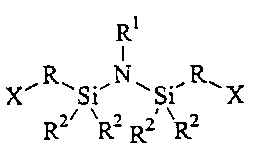 or a mixture of compounds of the general formulae IV and V, in which
**X** is F, Cl, Br or I,
**R**^{**1**} is a hydrogen atom or a monovalent, optionally halogen-substituted, Si-C-bound C₁-C₁₅-hydrocarbon radical in which in each case one or more non-adjacent methylene units may be replaced by -O-, -CO-, -COO-, -OCO-, -OCOO- or -S- groups and in which one or more non-adjacent methine units may be replaced by -N=, -N=N- or -P= groups, and
**R**^{**2**} and **R** are as defined in Claim 1,
is reacted with ammonia.

4. Process according to Claim 3, in which ammonia is employed in a 10- to 140-fold molar excess, based on the compounds of the general formulae IV and V.

5. Process for the preparation of bisaminoalkyl-terminated disiloxanes of the general formula III 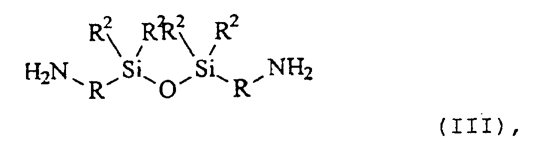 in which compounds of the general formula II according to Claim 1 are hydrolysed, where **R**^{**2**} and **R** are as defined in Claim 1.

6. Process for the preparation of aminoalkyl-terminated dialkylalkoxysilanes of the general formula VI 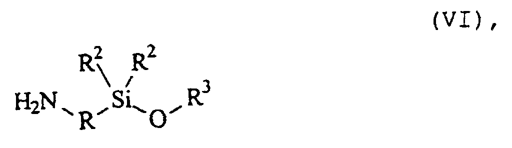 in which compounds of the general formula II according to Claim 1 are reacted with an alcohol of the general formula **R**^{**3**}-OH, where **R**^{**2**}**, R**^{**x**} and **R** are as defined in Claim 1, and
**R**^{**3**} is a monovalent, optionally cyano- or halogen-substituted C₁-C₂₀-hydrocarbon radical, in which one or more non-adjacent methylene units may be replaced by -O-, -CO-, -COO-, -OCO-, -OCOO-, -S- or -N**R**^{**x**}-groups and in which one or more non-adjacent methine units may be replaced by -N=, -N=N- or -P= groups and which may optionally carry further OH groups.

## Revendications

1. Silazanes cycliques de formule générale II 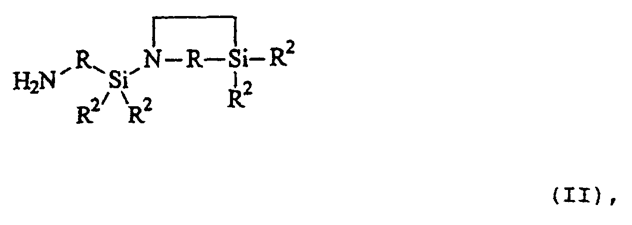 dans laquelle
R signifie un radical alkylène comprenant 3 à 4 atomes de carbone non ramifié, le cas échéant substitué par un halogène,
R^{x} signifie un hydrogène ou un radical hydrocarboné comprenant 1 à 10 atomes de carbone, le cas échéant substitué par un halogène, et
R² signifie un atome d'hydrogène ou un radical hydrocarboné comprenant 1 à 20 atomes de carbone ou un radical hydrocarboné oxy comprenant 1 à 20 atomes de carbone, monovalent, le cas échéant substitué par un cyano ou un halogène, lié par Si-C, dans lequel à chaque fois une ou plusieurs unités méthylène, qui ne sont pas adjacentes, peuvent avoir été remplacées par des groupements -O-, -CO-, -COO-, -OCO- ou -OCOO-, -S- ou -NR^{x}- et dans lequel une ou plusieurs unités méthine, qui ne sont pas adjacentes, peuvent avoir été remplacées par des groupements -N=, -N=N- ou -P=.

2. Silazanes cycliques selon la revendication 1, dans lesquels R² est choisi parmi les radicaux méthyle, éthyle, phényle, vinyle et trifluoropropyle.

3. Procédé pour la préparation des silazanes cycliques de formule générale II selon la revendication 1, dans lequel un halogénoalkyldialkylchlorosilane de formule générale IV 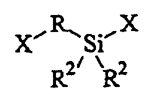 ou un bishalogénoalkyltétraalkyldisilazane de formule générale V 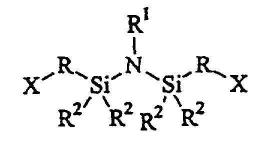 ou un mélange de composés des formules générales IV et V, dans lesquelles
X signifie F, Cl, Br ou I,
R¹ signifie un atome d'hydrogène ou un radical hydrocarboné comprenant 1 à 15 atomes de carbone, monovalent, le cas échéant substitué par un halogène, lié par Si-C, dans lequel à chaque fois une ou plusieurs unités méthylène, qui ne sont pas adjacentes, peuvent avoir été remplacées par des groupements -O-, -CO-, -COO-, -OCO- ou -OCOO-, ou -S- et dans lequel une ou plusieurs unités méthine, qui ne sont pas adjacentes, peuvent avoir été remplacées par des groupements -N=, -N=N- ou -P=, et
R² et R présentent les significations mentionnées dans la revendication 1,
est mis à réagir avec de l'ammoniac.

4. Procédé selon la revendication 3, dans lequel l'ammoniac est utilisé avec un excès molaire d'un facteur 10 à 140 par rapport aux composés des formules générales IV et V.

5. Procédé pour la préparation de disiloxanes à terminaison bisaminoalkyle de formule générale III 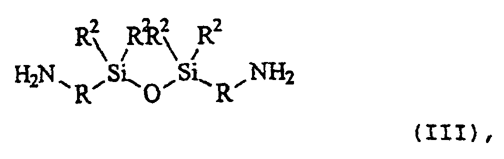 dans lequel des composés de formule générale II selon la revendication 1 sont hydrolysés, R² et R présentant les significations mentionnées dans la revendication 1.

6. Procédé pour la préparation de dialkylalcoxysilanes à terminaison aminoalkyle de formule générale VI 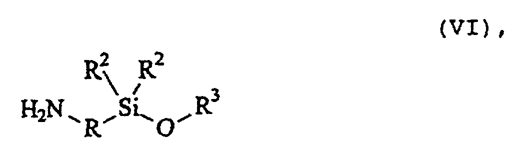 dans lequel les composés de formule générale II selon la revendication 1 sont transformés avec des alcools de formule générale R³-OH, R², R^{x} et R présentant les significations mentionnées dans la revendication 1 et R³ signifie un radical hydrocarboné comprenant 1 à 20 atomes de carbone, monovalent, le cas échéant substitué par un cyano ou un halogène, dans lequel une ou plusieurs unités méthylène, qui ne sont pas adjacentes, peuvent avoir été remplacées par des groupements -O-, -CO-, -COO-, -OCO- ou -OCOO-, -S- ou -NR^{x}- et dans lequel une ou plusieurs unités méthine, qui ne sont pas adjacentes, peuvent avoir été remplacées par des groupements -N=, -N=N- ou -P=, et qui peut le cas échéant porter d'autres groupements OH.
